Europäisches Patentamt

European Patent Office

Office européen des brevets

(19)

(11) Veröffentlichungsnummer: **0 278 427**
**A2**

(12) # EUROPÄISCHE PATENTANMELDUNG

(21) Anmeldenummer: **88101699.2**

(22) Anmeldetag: **05.02.88**

(51) Int. Cl.⁴: **A23L 1/317** , A23B 4/02

---

(30) Priorität: **06.02.87 DE 3703709**

(43) Veröffentlichungstag der Anmeldung:
**17.08.88 Patentblatt 88/33**

(84) Benannte Vertragsstaaten:
**BE CH DE ES FR LI NL**

(71) Anmelder: **GEWÜRZMÜLLER DR. E. RENDLEN GMBH & CO. Offene Handelsgesellschaft**
**Klagenfurter Strasse 1 - 3**
**D-7000 Stuttgart 30(DE)**

(72) Erfinder: **Rieck, Horst**
**Ernst-Bloch-Weg 7**
**D-7000 Stuttgart 30(DE)**

(74) Vertreter: **Freiherr von Pechmann, Eckehart, Dr. et al**
**Patentanwälte Wuesthoff- v. Pechmann-Behrens-Goetz-v. Hellfeld**
**Schweigerstrasse 2**
**D-8000 München 90(DE)**

---

(54) **Verfahren zur Herstellung streichfähiger Brüh- und Leberwurst.**

(57) Zur Herstellung streichfähiger Brüh-und Leberwurst wird die im Kutter zerkleinerte Masse aus rohem Fleisch und Speck, die gegebenenfalls noch Leber enthält, mit einem proteolytischen Enzympräparat versetzt und intensiv vermischt, anschließend in Wursthüllen oder Konservendosen abgefüllt und in üblicher Weise gebrüht oder sterilisiert.

EP 0 278 427 A2

## Verfahren zur Herstellung streichfähiger Brüh-und Leberwurst

Zur Herstellung von Brühwürsten wird entsehntes, rohes Rinderfleisch bzw. mageres Schweinefleisch, gegebenenfalls zusammen mit Speck oder Fettanteilen vom Rind oder Schwein im Wolf und Kutter fein zerkleinert, dann mit den Zusätzen, wie Nitritpökelsalz, Pfeffer, Muskat und anderen Gewürzen, versetzt, worauf die Brätmasse in natürliche Därme oder undurchlässige Kunstdärme eingefüllt einem Brühvorgang unterworfen wird. Hierbei tritt eine Koagulation des Eiweißes in der rohen Fleischmasse ein mit der Folge, daß feste, schnittfähige Brühwürste, wie Lyoner, Bockwürste und Frankfurter oder Wiener Würstchen, erhalten werden.

Zur Herstellung von Kochstreichwurst, z.B. Kochmettwurst und Leberwurst, wird der rohe Fleisch-und Fettanteil zunächst gekocht und dann im Kutter zerkleinert, gegebenenfalls mit Leber versetzt und dann nach Zugabe von Nitritpökelsalz, Gewürzen,usw.,in die Därme abgefüllt und die Würste gebrüht. Da die Koagulation des Fleischeiweißes beim Kochen des Fleisches, also bereits vor Herstellung der Wurstmasse eingetreten ist, bleibt diese auch nach dem Brühen streichfähig.

Es wurde nun überraschenderweise festgestellt, daß man auch bereits mit rohem zerkleinerten Fleisch-und rohem Fettgewebe streichfähige Brüh-und Leberwurste herstellen kann,wenn man im Kutter zerkleinerten Fleisch ein proteolytisches Enzympräparat zufügt, das das Fleischeiweiß während der Zeitspanne der Verarbeitung bis zur Inaktivierung des Enzyms beim Erhitzen durch den Brühvorgang hydrolytisch spaltet und partiell abbaut. Auf diese Weise wird das Fleisch so verändert, daß es bei der Erhitzung durch das Brühen oder auch Hitzesterilisieren nicht mehr zusammenhängend koaguliert. Die weiche, streichfähige Konsistenz der Wurstmasse bleibt erhalten.

Es war zwar bereits seit langem bekannt, daß man rohes Fleisch durch proteolytische Enzyme behandeln kann, um dieses mürbe zu machen, so daß es ohne längeres Abhängen gebraten werden kann; vgl. Ullmanns Encyklopädie der technischen Chemie, Bd. 10, 1975, S. 524 und 525. So kann durch Injektion von Proteasen, insbesondere von Lösungen der pflanzlichen Protease Papain der Papayafrucht sowie auch durch Bromelin der Ananaspflanze und auch mikrobiologischen Proteasen, in die Fleischstücke ein proteolytischer Abbau der Fleischproteine erreicht werden, mit der Wirkung, daß schon bald nach dem Schlachten ein gut bratfähiges, mürbes Fleisch erhalten wird. Auf diese Weise kann das Abhängen des Fleisches verkürzt werden. Auch hat man bereits derartige Enzympulver für diesen Zweck bei der Oberflächenbehandlung von Fleisch verwendet. Hierbei wird das Enzym, z.B. Papain, auf die Oberfläche des Fleischstücks, z.B. des Steaks, aufgebracht und eingerieben, wobei das Eindringen des Enzyms durch Einstechen in das Fleisch gefördert wird. Nach einer Einwirkungszeit von 10 bis 30 Minuten wird dann das Fleischstück gebraten oder gekocht.

Aus der britischen Patentanmeldung 21 35 331-A ist auch bekannt, gehacktes Gefrierfleisch mit einer ölhaltigen, proteolytischen Enzymzubereitung zu behandeln, um das Zähwerden beim Stehenlassen der daraus bereiteten HamburgerSteaks zu verhindern; ein Problem, das nichts zu tun hat mit der Herstellung von streichfähigen Brühwürsten, denn die Hamburger-Steaks sollen auch nach dem Braten oder Kochen, d.h. dann als sogenannte Königsberger Klopse, noch fest und kompakt sein.

Beim erfindungsgemäßen Verfahren wird nun dagegen die Protease verwendet, um das zusammenhängende Koagulieren des rohen Fleisches in der Wurstmasse beim Koch-und Brühvorgang zu verhindern mit der Folge, daß streichfähige Wurstmassen nach dem Brühen erhalten werden. Das so durch die proteolytischen Enzympräparate behandelte rohe Fleischbrät kann außer in Wursthüllen natürlich auch in Konservendosen abgepackt und dann darin gekocht oder hitzesterilisiert werden, ohne daß hierbei eine Verfestigung der Fleischmasse eintritt.

Für die Durchführung des erfindungsgemäßen Verfahrens eignen sich in der Praxis Enzympräparate, welche außer den Proteasen noch die für die Zubereitung der Wurstmasse benötigten Gewürze und sonstigen Zusätze enthalten. Insbesondere Pfeffer, Muskatblüte, Ingwer, Koriander sowie auch Ascorbinsäure usw. können mit der Protease in die zerkleinerte Fleischmasse in einem Arbeitsgang eingearbeitet werden.

Als Proteasen eignen sich auch hier besonders Papain, Pankreatin der tierischen Bauchspeicheldrüse sowie die verschiedenen mikrobiologischen Proteasen, z. B. die Proteinase des Bakeriums subtilis sowie die Proteinasen von Schimmelpilzen, z.B. von Aspergillus orice usw., die alle im Handel erhältlich sind.

Das Verfahren ist äußerst einfach durchzuführen, da die übliche Zerkleinerung des Fleisches im Wolf und/oder Kutter ausreicht, wobei das Fleisch zunächst durch Zugabe von Eis bei tiefen Temperaturen gehalten wird. Nach dem Vermischen mit dem proteolytischen Enzympräparat und weiteren Zusätzen kann man die Masse auf Zimmertemperatur ansteigen lassen und dann zu Würsten verarbeiten bzw. in Konservendosen abfüllen. Während der Einwirkungsdauer des Enzyms, d.h. in der Zeitspanne von '0 bis 120 Minuten bis zur Hitzeinaktivierung beim Brühen der Würste oder Sterilisieren der Konserven tritt der partielle Abbau des Fleischeiweißes in der Masse selbständig ein. Die Einwirkungsdauer des Enzyms läßt sich durch Wahl der Zeitspanne bis zur Hitzeinaktivierung, die bei Überschreiten der Temperatur von ca. 65 - 70°C eintritt, sowie auch durch die Temperatur der Masse bei der Verarbeitung leicht regulieren.

Im Falle der Herstellung von Leberwürsten kann man das zerkleinerte, rohe Fleisch mit dem proteolytischen Enzym versetzen und vermischen und dann die benötigte Menge Leber hinzufügen oder man zerkleinert das rohe Fleisch und das rohe Fettgewebe und vermischt es dann mit der Leber, um dieser Mischung anschließend das Enzympräparat zuzusetzen. Welche der jeweiligen Maßnahmen und Abwandlungen im Einzelfall am besten geeignet sind, wird der Fachmann im Hinblick auf das verwendete Ausgangsmaterial, d.h. Art des Fleisches, sowie auf die gewünschte Konsistenz der betreffenden Würste wählen, ohne hierbei vom Erfindungsgedanken abzugehen.

Das erfindungsgemäße Verfahren zur Herstellung der streichfähigen Brüh-und Leberwürste ist deshalb auch besonders wirtschaftlich, weil nunmehr das vorherige Kochen des Fleisches und des Fettgewebes vor der Zerkleinerung wegfällt. Es ist nur mehr ein einziger Erhitzungsvorgang notwendig, d.h. das Brühen der Würste bzw. Sterilisieren der Konserven.

Die Erfindung soll anhand der nachfolgenden Beispiele noch näher erläutert werden.

**Beispiel 1**

Herstellung streichfähiger Brühwürste

20 kg entsehntes Rindfleisch mit einem sichtbaren Fettanteil bis höchstens 5%,
22 kg magere, sehnenfreie Schweinefleischabschnitte mit einem sichtbaren Fettanteil von höchstens 5%,
20 kg Schweinefettbacken,
20 kg Speck vom Nacken mit einem geringen Magerfleischanteil werden in an sich bekannter Weise im Wolf und anschließend im Kutter bei gleichzeitiger portionsweiser Zugabe von 18 kg Eis zerkleinert.

Je kg zerkleinerter Masse werden dann 24 g Nitritpökelsalz und 3 g Kutter-Phosphat sowie als Enzympräparat 0,3 g Papain in konzentrierter handelsüblicher Pulverform zusammen mit 1,5 g Pfeffer weiß, gemahlen, 0,5 g Muskatblute, gemahlen, 0,3 g Ingwer, gemahlen, 0,5 g Koriander, gemahlen, 0,3 g Ascorbinsäure und 2,0 g Dextrose zugefügt und intensiv vermischt. Die hierbei auf 14°C erwärmte Masse wird in undurchlässige Kunstdärme eingefüllt, wie üblich zu Einzelwürsten abgeschnürt und diese dann 90 Minuten lang gebrüht. Hierbei tritt eine allmähliche Erhitzung der Wurstmasse bis zu einer Kerntemperatur von ca. 75 - 80°C ein. Durch diese Erhitzung wird das Papain zunächst aktiviert und dann bei Überschreiten der Inaktivierungstemperatur bei etwa 68 - 70° C völlig inaktiviert.

Die nach dem Abkühlen erhaltenen Fleischwürste sind im Gegensatz zu den bisher bekannten Brühwürsten gut streichfähig.

**Beispiel 2**

Herstellung streichfähiger Leberwürste

Wie im Beispiel 1 beschrieben werden 26 kg Leber, 23 kg mageres Schweinefleisch sowie 48 kg Griffe und Speckabschnitte zusammen mit 3 kg Eis im Wolf und Kutter verarbeitet. Zu 1 kg dieser Wurstmasse werden dann 20 g Nitritpökelsalz sowie 0,3 g Papain in konzentrierter handelsüblicher Form zusammen mit 0,3 g Ascorbinsäure, 2,0 g Dextrose, 1,0 g Pfeffer, weiß, gemahlen, 0,5 g Muskatblüte, gemahlen, 0,5 g Majoran, gemahlen und 0,2 g Ingwer, gemahlen, hinzugefügt und intensiv vermischt. Die Wurstmasse wird in undurchlässige Kunstdärme abgefüllt und zu Abschnitten abgebunden. Die erhaltene Wurstkette wird dann in bekannter Weise gebrüht.

Alternativ kann die Wurstmasse auch in Dosen abgefüllt und diese dann hitzesterilisiert werden. In beiden Fällen wird eine sehr gut streichfähige Leberwurst erhalten.

**Ansprüche**

1. Verfahren zur Herstellung streichfähiger Brüh-und Leberwurst, dadurch **gekennzeichnet,** daß man die im Kutter zerkleinerte Masse aus rohem Fleisch und Speck, die gegebenenfalls noch Leber enthält, mit einem proteolytischen Enzympräparat versetzt und intensiv vermischt, worauf die Masse in Wursthüllen oder Konservendosen abgefüllt und in üblicher Weise gebrüht oder sterilisiert wird.

2. Verfahren zur Herstellung von Leberwurst nach Anspruch 1, dadurch **gekennzeichnet,** daß man die Masse aus zerkleinertem rohen Fleisch und Speck mit dem proteolytischen Enzympräparat versetzt und nach einiger Zeit dann die Leber zusetzt.

3. Verfahren nach Anspruch 1 oder 2, dadurch **gekennzeichnet,** daß man als proteolytisches Enzympräparat Papain, Pankreatin oder eine mikrobiolgische Protease verwendet.

4. Verfahren nach Anspruch 1 - 3, dadurch **gekennzeichnet,** daß man die Einwirkungsdauer des Enzympräparates, gerechnet vom Vermischen mit der rohen Fleischmasse bis zum Erreichen der Inaktivierungstemperatur beim Brühvorgang auf 10 - 120, vorzugsweise 20 - 60, Minuten einstellt.

5. Enzympräparat zur Durchführung des Verfahrens nach Anspruch 1 bis 4, dadurch **gekennzeichnet,** daß es ein proteolytisches Enzym zusammen mit den für eine Wurstherstellung zu verwendenden Gewürzen und Zusätze enthält.